(19) Europäisches Patentamt

European Patent Office

Office européen des brevets

(11) **EP 1 827 035 B1**

(12) **EUROPEAN PATENT SPECIFICATION**

(45) Date of publication and mention of the grant of the patent:
**15.07.2009 Bulletin 2009/29**

(51) Int Cl.:
*H04W 52/04* *(2009.01)*    *H04L 12/56* *(2006.01)*

(21) Application number: **07004067.0**

(22) Date of filing: **27.02.2007**

(54) **Method for transmitting service data for various radio access technologies via common public radio interface**

Verfahren zur Übertragung von Dienstdaten für verschiedene Funkzugangstechnologien über eine gemeinsame öffentliche Funkschnittstelle

Procédé pour la transmission de données de service pour diverses technologies d'accès radio via une interface de radio publique commune

(84) Designated Contracting States:
**AT BE BG CH CY CZ DE DK EE ES FI FR GB GR HU IE IS IT LI LT LU LV MC NL PL PT RO SE SI SK TR**

(30) Priority: **27.02.2006 CN 200610024171**

(43) Date of publication of application:
**29.08.2007 Bulletin 2007/35**

(73) Proprietor: **Huawei Technologies Co., Ltd.**
**Shenzhen, Guangdong Province 518129 (CN)**

(72) Inventors:
• **Xia, Yingjiu**
  **Longgang Dist.**
  **Shenzhen**
  **Guangdong 518129 (CN)**
• **Jiang, Yajun**
  **Longgang Dist.**
  **Shenzhen**
  **Guangdong 518129 (CN)**

(74) Representative: **Goddar, Heinz J.**
**Forrester & Boehmert**
**Pettenkoferstrasse 20-22**
**80336 München (DE)**

(56) References cited:
**WO-A-20/05029713    US-A1- 2005 105 534**
**US-A1- 2005 105 552**

• **"CPRI Specification V2.0 (2004-10-01)"**
  **INTERNET CITATION, [Online] 1 October 2004 (2004-10-01), XP002359217 Retrieved from the Internet: URL:http://www.cpri.online/> [retrieved on 2005-12-15]**
• **OBSAI: "Reference Point 3 Specification Version 1.0" OBSAI SPECIFICATION, 5 February 2004 (2004-02-05), pages 1-72, XP002991635**

## Description

This application claims the priority of Chinese patent application No. 200610024171.3 filed with the Chinese Patent Office on February 27, 2006, entitled "METHOD FOR TRANSMITTING RADIO SERVICE IQ DATA FOR VARIOUS RADIO ACCESS TECHNOLOGIES VIA COMMON PUBLIC RADIO INTERFACE", contents of which are incorporated hereby by reference in its entirety.

## Field of the Invention

The present invention relates to the field of radio communication technologies, and in particular to a method for transmitting service data for different Radio Access Technologies (RATs) via a Common Public Radio Interface (CPRI) Radio Equipment Control (REC)-Radio Equipment (RE) interface.

## Background of the Invention

The CPRI specification is proposed by several companies in the industry with respect to a crucial interface internal to a radio base station for mobile communications. This CPRI specification is common to the industry in connection with the crucial interface, and provides a set of common standards for the crucial interface internal to the base station. It is in the CPRI specification that a crucial internal interface for the radio base station between an REC and an RE is defined. Such standards have been established for the purpose of creating an open market orientated to cellular base stations, and thereby greatly reducing enormous development labors and high costs conventionally concomitant throughout the design of a base station.

Collaborations in the CPRI industry are focused on the design of base stations for a 3rd Generation (3G) mobile communication system, in which a radio base station is divided into a radio part and a control part, such that both parts may benefit more from technical advancements in their respective fields.

For a network operator, more abundant series of radio base station products are available to adapt various network deployment plans. In addition, the CPRI specification enables base station equipment manufacturers and component providers to focus on research and development activities relevant to their core competitiveness.

With more rapid advancement of this specification technology, and more abundant series of products provided by the base station manufacturers for the operators to choose, more flexible solutions are obtained and the efficiency of network deployments is further improved.

The initiators of the CPRI specification cooperated to initiate a competitive industry of mobile network components, and enable the entire radio industry to benefit from the opening of CPRI REC-RE interfaces. The CPRI specification is complementary to existing standardization organizations, such as the 3rd Generation Partnership Project (3GPP), and common interfaces developed under the specification can be applied to radio base station products of a mobile system.

For a 3G mobile communication system, such as a Wideband Code Division Multiple Access (WCDMA) system, the CPRI specification may be adapted to implement a Layer 1 (L1) or Layer 2 (L2) communication protocol between a baseband control unit and a radio frequency unit. The CPRI specification can enhance universality of an interface between the baseband control unit and the radio frequency unit and may be advantageous to interconnection between baseband and radio frequency modules from various manufacturers.

Subsequent to the successful introduction of the CPRI specification, a problem in urgent need of being addressed currently is how to update or improve the system architecture and the networking approach for a 3G radio base station. For a common interface between baseband and radio frequency, both system architecture and networking approach need to be proposed accordingly for full use of its advantages. In addition, a solution for network transmission reliability needs to be provided in terms of the system architecture, such that integrity, compatibility and reliability of a base station system can be guaranteed in the case of the common interface architecture and based on the cooperation of various equipment manufacturers.

As can be seen from the development of the 2nd generation Global System of Mobile Communication (GSM) and the WCDMA, in the evolution at each stage, various RATs emerge constantly and will coexist for a long time, such as GSM of the 2nd generation, WCDMA, CDMA2000, Time Division-Synchronous Code Division Multiple Access (TS-CDMA) of the 3rd generation, two Worldwide Interoperability Microwave Access (WiMAX) standards of the Institute of Electrical and Electronic Engineers (IEEE), 802.16d and 802.16e, etc. As a common radio interface in the industry, the CPRI needs to be adapted to the needs of various RATs, thus embodying the practicability of a common interface.

Radio frame timings, radio frame numbers and data rates for different RATs in different stages have been organized differently. A radio frame timing refers to an indicative signal that identifies the start of a period of a radio frame from a radio base station. Different frame periods are defined for different RATs, for instance, a frame period of 10 ms for WCDMA R6 and earlier versions, a frame period of 60/13 ms for GSM, and many options including 2 ms, 5 ms or the like of a frame period for 802.16e, etc. A radio frame number refers to a serial number of a radio frame. Different RATs are enabled with different methods for indication of a radio frame number and thus with different numbers of binary bits; for instance, a 12-bit radio frame number for WCDMA R6 and earlier versions, and a more complex frame number for GSM.

Radio service data refers to modulated data streams of two components, In-Phase and Quadrature (IQ). User plane data between an REC and an RE is transmitted through IQ data. IQ data is usually transmitted in an IQ container, which is also called an Antenna xCarrier (AxC) container in the CPRI specification, and the detail of which can be found in CPRI standards. For ease of understanding, it is called IQ container directly.

Radio IQ data for certain RATs needs to be mapped into an IQ container due to different RAT rates (data rates). A main factor which affects the complexity in mapping IQ data for different RATs into a CPRI IQ container is the different RAT rates. For CDMA, the RAT rate is a code chip rate (3.84MHz for WCDMA, 1.2288MHz for CDMA2000, 1.28 MHz for TD-SCDMA); for GSM, the RAT rate is a symbol rate of 13/48 MHz; for WiMAX, the RAT rate is a sampling frequency, wherein there are many options for the RAT rate for WiMAX, as shown in Table 1 below. The RAT rate is not a common name in the art, but a broad definition introduced here to describe various RATs. An RAT period is defined as a reciprocal of the RAT rate, which is a code chip period for CDMA; a symbol period for GSM; a sampling period for WiMAX.

Table 1. Baseband frequencies for WiMAX

| Channel Bandwidth (MHz) | Sampling Frequency (MHz) | Number of Multiplexes (n) |
|---|---|---|
| 1.75/3.5/7/14/28 | 2.0/4.0/8.0/16.0/32.0 | 8/7 |
| 1.5/3/6/12/24 | 1.72/3.44/6.88/13.76/27.52 | 86/75 |
| 1.25/2.5/5/10/20 | 1.44/2.88/5.76/11.52/23.04 | 144/125 |
| 2.75/5.5/11/22 | 3.16/6.32/12.64/25.28 | 316/275 |
| 2.0/4/8/16/32 | 2.28/4.56/9.12/18.24/36/48 | 57/50 |
| Others | / | 8/7 |

With the CPRI specification as a standard for the common interface between an REC and an RE, if radio frames for different RATs can be transmitted, the competitiveness can be greatly improved. The current CPRI specification version is V2.0 which is made for WCDMA R5 and previous standards and can not be applied to other RATs, such as IEEE 802.16e, GSM, etc. For adaptation to technology advancements in the mobile communication industry, a common radio interface is needed urgently for convenient and efficient transmission of radio service data for different RATs.

As a result of the present development of radio communications, the REC and the RE of a base station tend to be separated in terms of physical implementation and developed separately. An interface between the REC and the RE is defined by a standard protocol or a protocol defined by a manufacturer itself. The CPRI specification is such a standard for the interface between the REC and the RE.

Because CPRI specification V2.0 is made for WCDMA, the basic frame rate determined in the CPRI specification is the code chip rate for WCDMA (3.84MHz), and the rate of WCDMA CPRI IQ data is equal to an integer multiple of the WCDMA code chip rate, such that it is easy to carry IQ data of WCDMA in a CPRI IQ container.

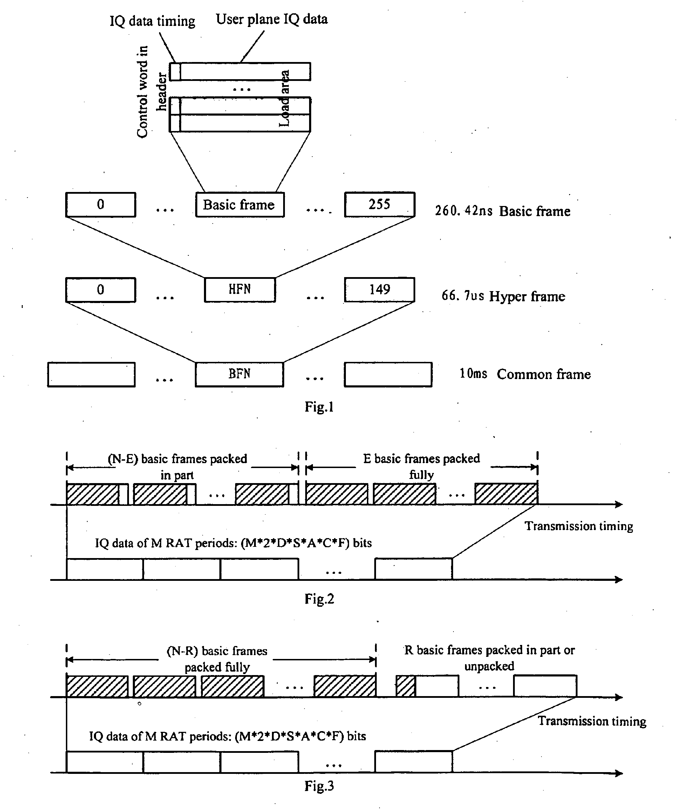

Fig.1 illustrates the basic principle of transmitting IQ data of WCDMA over an existing CPRI specification V2.0 interface. For example, a line rate for a CPRI REC-RE interface is 1.2288Gbps, and the size of an IQ container of each basic frame is 15 × 16 = 240 bits. Supposing the sampling factor for uplink IQ data of WCDMA is 2, the bit width of the uplink IQ data is 12 (i.e., 12 bits), the number of uplink antennas is 2, and the number of carriers is 2, there are 12 (bits) × 2 (I and Q) × 2 (sampling factor) × 2 (number of antennas) × 2 (number of carriers) = 192 bits, to be transmitted in each code chip period (i.e. the period of each CPRI basic frame). Timing information is carried in a header of each 10-ms frame, corresponding to IQ data carried in a load area of the basic frame. This timing information includes a Hyper Frame Number (HFN) field and a Node B Frame Number (BFN) field defined in the CPRI specification. Accordingly, it only needs to arrange the 192-bit uplink data into a 240-bit IQ container for uplink and downlink CPRI basic frames and the corresponding timing information into the headers. Attention should be paid to a synchronization relationship between the timing information and the IQ data upon framing and deframing.

As a result of the special frame structure in CPRI specification V2.0, frame synchronization can be implemented simply through a control field such as BFN without any special design for IQ container mapping, due to the substantial match between the IQ code chip data rate and the CPRI frame rate in the case of carrying IQ data of WCDMA R6.

In a practical application, however, a problem with the above solution lies in that: when the CPRI specification is extended to another RAT while maintaining the line rate and frame structure defined in the CPRI specification, the IQ data can not be mapped as simply as for WCDMA. In other words, because there is no simple multiple relationship between the RAT rate and the CPRI basic frame rate, the mapping of IQ data for different RATs is more complex than that for WCDMA over a CPRI REC-RE interface. In addition, transmission and frame synchronization of IQ data for another RAT, especially simultaneous transmission of radio IQ data for different RATs, can not be implemented in the existing radio data transmission architecture of CPRI specification V2.0. In one word, as a result of the simple multiple relationship between the CPRI basic frame rate and the WCDMA rate, IQ data for WCDMA can be transmitted using the existing transmission mechanism under the CPRI specification, but can not be extended to another RAT or applied to implement simultaneous transmission for different RATs.

This is because the length of a common frame and the structure of a control word for WCDMA in existing CPRI specification V2.0 can not be used for IQ data for another RAT, especially because of the challenges in frame synchronization and IQ container mapping caused by the unmatched RAT rates. The inventors found that two problems need to be addressed to adapt the CPRI so as to be applicable to different RATs: one concerns the method of mapping IQ data for different RATs into CPRI IQ containers; another concerns how to obtain a synchronization relationship among radio frames of the different RATs.

Further. WO 2005/029713A (March 31, 2005) disclosed a device for a radio station, said device comprising a first multiplexer provided with at least two inlets for receiving base band data and an outlet for delivering base band data to an emission unit. The device is also provided with a first processing unit that is connected to the first inlet of the first multiplexer, for delivering first base band data at a first data rate for transmission by the emission unit according to a first radio standard, and a second processing unit that is connected to the second input of the first multiplexer, for delivering second base band data at the first data rate for transmission by the emission unit according to a second radio standard. US 2005/105534 A1 (May 19, 2005) disclosed a radio base station which has an internal interface which connects a radio equipment and a radio equipment controller. At least one and preferably both of the example radio equipment and radio equipment controller comprises a framer which can be controlled for transmitting samples of different protocols over the internal interface. The framer facilitates (1) time multiplexing of N number of frames of a first protocol over the internal interface- (2) inserting L number of samples of a second protocol into M number of the frames of the first protocol, and (3) inserting a padding sample into each frame of the first protocol which does not include a sample of the second protocol. The first protocol has a frame rate; the second protocol has a sample rate which is different from the frame rate of the first protocol, and N is greater than L and M. US 2005/105552 A1 (May 19, 2005) disclosed a distributed radio base station comprises a radio equipment controller situated at a main site and a radio equipment situated at a remote site. A remote unit configure to engage in direct communications with the radio equipment controller is also situated at the remote site. An internal interface connects the radio equipment controller and the radio equipment (RE). Advantageously, the internal interface also encapsulates the direct communications between the radio equipment controller and the remote unit, thereby obviating a separate physical link between the radio equipment controller and the remote unit. A new physical link transmits; between the radio equipment and the remote unit, the direct communications between the radio equipment controller and the remote unit which are encapsulated over the internal interface.

## Summary of the Invention

Embodiments of the invention provide a method for transmitting radio service IQ data for various RATs via a CFR9REC-RE interface, thereby radio service data for different RATs can be transmitted via the GP4U-REC-RE interface.

In an embodiment of the present invention, there is provided a method for transmitting service data for various RATs via the REC-RE interface, including:

determining, according to a REC-RE interface basic frame period and an RAT period of the service data, a REC-RE interface data transmission period to be a common multiple period of the CPRI basic frame period and the RAT period of the service data;

if the REC-RE interface data transmission period is equal to an integer N times the REC-RE interface basic frame period and to an integer M times the RAT period of the service data, carrying corresponding data of every M RAT periods in a basic frame group composed of every N basic frames;

designating a data packing rule corresponding to each service of each RE, wherein according to the data packing rule, carrying space of K bits in a load area of each basic frame in the basic frame group is assigned for each RE, K being an integer derived by rounding un $[M \times 2 \times D \times S \times A \times C \times F/N]$, where A is a number of antennas of the RE, C is a number of carriers of the RE, S is an oversampling factor for REC-RE interface In-Phase/Quadrature (IQ) data, D is a bit width of the IQ data for each RAT, and F is a number of sectors supported by the RE;

determining a packing pattern in which data of the M RAT periods are packed in load areas of the basic frame group, according to the data packing rule;

transmitting the service data for the various RATs on REC-RE interface uplink/downlink according to the data packing rule.

Compared with the prior art, in the technical solution provided in the embodiment of the invention, IQ data of M RAT periods is arranged in N REC-RE interface basic frames for transmission according to a common multiple relationship between a basic frame period and a service RAT period, such that the service data rate matches the REC-RE interface rate so as to transmit data synchronously.

The IQ data of the M RAT periods is packed in IQ containers of the N CPRI basic frames as evenly as possible, various packing patterns may be designed according to the demand of service, etc.

IQ data for different RATs may be transmitted over a CPRI REC-RE interface by dividing IQ data areas corresponding to different REs and different RATs in CPRI basic frame IQ containers over the same CPRI REC-RE interface.

Based on the common multiple relationship between a 10-ms CPRI frame period and a radio frame period for an RAT, the boundary of a common multiple period of a CPRI 10-ms frame and a radio frame (preferably, the boundary of a least common multiple period) may be indicated on CPRI downlink, from which the REC starts to send IQ data of a new basic frame group on the CPRI downlink and sends IQ data repeatedly at a period of the basic frame group. The RE may obtain information on a starting position of each basic frame group and extract the IQ data through a counter of its own with reference to the boundary of the common multiple period of a CPRI 10-ms frame and a radio frame.

Based on a fixed total time delay for transmission and processing on the CPRI downlink and uplink, the REC may obtain information on the starting position of the basic frame group received on the CPRI uplink and extract the IQ data according to the timing information at the time of sending on the CPRI downlink and the time delay information when the RE sends uplink data.

The difference in technical solution results in the following effects: radio IQ data for different RATs may be packed and synchronized through mapping using a common multiple relationship, such that the common interface is applicable to different types of RAT, thereby enhancing compatibility of the interface, improving flexibility in radio transmission, and simplifying the radio interface transmission mechanism;

an existing CPRI REC-RE interface is extended to a common interface applicable to simultaneous transmission of radio data for different RATs, so as to meet the requirements of technology developments and promote spreading of radio communications;

when transmitting service data for different RATs through different REs or through mapping of radio service IQ data for different RATs in CPRI basic frames in a fixed manner, data can be transmitted in a rate as even as possible by mapping the IQ data as evenly as possible, thereby ensuring the system is better in delay performance.

## Brief Description of the Drawings

Fig.1 is a schematic diagram illustrating the principle of transmitting WCDMA R6 data frames and frame synchronization in CPRI specification V2.0 of the prior art;

Fig.2 is a schematic diagram illustrating a later-first IQ data packing rule according to an embodiment of the invention;

Fig.3 is a schematic diagram illustrating an earlier-first IQ data packing rule according to an embodiment of the invention;

Fig.4 is a schematic diagram illustrating the principle of a downlink synchronization method according to an embodiment of the invention;

Fig.5 is a schematic diagram illustrating the principle of an uplink synchronization method according to an embodiment of the invention;

Fig.6 is a flowchart of IQ data transmission according to an embodiment of the invention.

## Detailed Description of the Embodiments

The invention will be further described with reference to the drawings and embodiments thereof.

In order to transmit radio frames of different RATs over a common radio interface, service data of different RAT periods should be carried in uniform basic frames. The key for solving this problem is how to pack IQ data of different data rates in the basic frames and the synchronization mechanism. Due to the variations in RAT period, radio frame length and RAT, neither frame synchronization for different RATs nor packing of IQ data of different data rates can be implemented based on the original basic frame synchronization mechanism and frame number transmission. What needs to be addressed is the method of mapping IQ data for different RATs into CPRI IQ containers and determination of a starting time of radio frame.

In an embodiment of the invention, a common multiple period is determined according to a common multiple relationship between an RAT period of radio frame and a basic frame period such that there are exactly M (being an integer) service RAT periods or N (being an integer) basic frames in the common multiple period. For transmission in unit of the common multiple period, data of M radio service RAT periods are carried in a basic frame group composed of N consecutive basic frames. The key of this solution is how to pack IQ data of the M service RAT periods in the group ofN basic frames.

For transmission of service data of different RATs, an embodiment of the invention provides synchronization methods for different IQ data packing patterns. Based on a common multiple relationship between a 10-ms CPRI frame period and a radio frame period for an RAT, the boundary of a common multiple period of a CPRI 10-ms frame and a radio frame (preferably, the boundary of a least common multiple period) may be indicated on CPRI downlink, from which the REC starts to send IQ data of a new basic frame group on the CPRI downlink and sends IQ data repeatedly at a period of the basic frame group. The RE may obtain information on a starting position of each basic frame group and extract the IQ data through a counter of its own with reference to the boundary of the common multiple period of a CPRI 10-ms frame and a radio frame. While on CPRI uplink, the starting time of the basic frame group may be obtained according to a fixed transmission time delay and processing time delay.

In addition, for forwarding IQ data of cascaded REs, a transparent transmission mechanism at the interface level is employed in an embodiment of the invention, in which an RE need not care the IQ data packing pattern for another RE and information on radio frame timing related to the IQ data of the another RE when forwarding IQ data of the another RE. Further, the IQ container mapping method for CPRI uplink/downlink may be designed in two ways: one is that the method for CPRI uplink is the same as for CPRI downlink, wherein one direction in which the data rate is greater is selected to configure, and packing and mapping in another direction in which the data rate is less are implemented as in the direction in which the data rate is greater; the other way is to select and pack and map according to the respective data rates on the uplink and downlink.

A method for transmitting radio service data for different RATs uniformly will be described in detail below in embodiments. In an embodiment, radio data for different RATs may be transmitted by extending CPRI specification V2.0. The key lies in transmission in unit of a common multiple period, three basic steps of which are: determination of the common multiple period; design of an IQ packing rule; and transmission of IQ data.

Specifically, a common multiple period is determined according to a common multiple relationship between a CPRI basic frame period and an RAT period of radio frame, to be equal to an integer N times the basic frame period and an integer M times the RAT period of radio service, and data of every M radio service RAT periods are carried in a basic frame group composed of every N basic frames; an IQ service data packing rule corresponding to each service of each RE is designed to describe a packing pattern in which the IQ data of every M service RAT periods are packed in load areas of the basic frame group; the REC or the RE transmits and receives the radio service IQ data for various RATs on the CPRI uplink/downlink according to the IQ data packing rule.

The common multiple period is a common multiple of the basic frame period and the service RAT period. The entire data of M RAT periods of an RAT is carried in N CPRI basic frames. M and N are determined in such a way that both M and N are integers and there is no divisor between M and N; and that $M/N=f1/f0$, where $f1$ is an RAT rate and $f0$ is the CPRI basic frame rate (3.84 MHz).

Table 2 shows exemplary values of M and N for different RAT rates for some common radio service standards, such as WCDMA, GSM, WiMAX, etc. Here the N basic frames for transmitting the entire data of the M RAT periods are called a "basic frame group".

Table 2. Values of M and N corresponding to different RAT rate

| RAT Rate (MHz) | Number of RAT Periods, M | Number of Basic frames, N |
|---|---|---|
| 2 | 25 | 48 |
| 1.4 | 35 | 96 |
| 1.68 | 7 | 16 |
| 2.24 | 7 | 12 |
| 3.08 | 77 | 96 |
| 1.2288 | 8 | 25 |
| 1.28 | 1 | 3 |
| 3.84 | 1 | 1 |
| 13/48 | 325 | 4608 |

Considering the IQ data of different rates are to be carried in basic frames of the same rate, and in order to ensure little change in processing time delay, IQ packing should be performed as evenly as possible such that radio frame IQ data of each radio service of each RE is carried in each basic frame in the basic frame group as evenly as possible.

Assuming K bits in an IQ container of each CPRI basic frame are reserved for each RE, for transmitting IQ data of the RE, A is the number of antennas of the RE, C is the number of carriers of the RE, S is the oversampling factor for the CPRI IQ data, D is the bit width of IQ data for each RAT, and F is the number of sectors supported by the RE, then

$$K = [M \times 2 \times D \times S \times A \times C \times F / N],$$

where [] represents rounding up. A, S and D may take different values for uplink and downlink. Mx2xDxSxAxCxF represents the total number of IQ bits of the RE to be transmitted in the N basic frames.

K may take different values for uplink and downlink of the RE. In practice, different sizes may be assigned to basic frame IQ containers for CPRI uplink and CPRI downlink of the RE, or the same size may be assigned based on a grater K between those for uplink and downlink. Even in the case of assigning the same size of the IQ containers for uplink and downlink based on a grater K, uplink and downlink data are still packed according to the respective calculated values of K, and the rest of the container space is kept empty.

In each CPRI basic frame, different positions in an IQ container are assigned for different REs. If an RE supports different RATs, positions in the IQ container assigned to IQ data for the different RATs of the RE are also separate from each other. All positions in IQ containers are assigned identically for all basic frames, and are not changed from one basic frame to another.

In an IQ data packing rule according to an embodiment of the invention, when the whole assigned carrying space in a basic frame group is larger than actual carrying space for service IQ data of M RAT periods, the carrying space in a basic frame with a later transmission timing in the basic frame group is packed first, such that the whole carrying space in a part of basic frames with a later transmission timing is packed, and other basic frames in the basic frame group are packed with the same amount of data.

As described above, the number of IQ data bits of an RE to be packed in N CPRI basic frames is Mx2xDxSxAxCxF. A packing pattern according to the embodiment of the invention is shown in Fig.2. In Fig.2, E is a remainder of Mx2xDxSxAxCxF/N, and the meanings of other parameters are defined as above. In the pattern shown in Fig.2, each of the first (N-E) basic frames in a group of N CPRI basic frames is packed with IQ data of (K-1) bits; each of the next E basic frames in the group of N CPRI basic frames is packed with IQ data of K bits. The packing order of IQ data illustrated in Fig.2 is, from a higher priority to a lower priority (i.e., IQ data with a higher priority is packed first, then that with a lower priority), I/Q, D (bit serial number in the IQ data), S (oversample serial number), A (antenna serial number), C (carrier serial number), F (sector serial number), M (RAT period serial number). Such a packing order is just an example, and another packing order may be used.

As an extension to the pattern of Fig.2, each of the first E basic frames in a group ofN CPRI basic frames is packed with IQ data of K bits; each of the next (N-E) basic frames in the group of N CPRI basic frames is packed with IQ data of (K-1) bits, the complexity and performance of which is completely the same as that shown in Fig.2, and which is one of the earlier-first patterns. The carrying space in a basic frame with an earlier transmission timing in the basic frame group is packed first, such that the whole carrying space in a part of basic frames with an earlier transmission timing is packed, and other basic frames in the basic frame group are packed with the same amount of data.

Fig.3 is a schematic diagram illustrating an earlier-first IQ data packing rule according to an embodiment of the invention. In the pattern of Fig.3, as in an "N-basic frame group", each of earlier basic frames is packed with K bits, until IQ data of (Mx2xDxSxAxCxF) bits are packed, and what in IQ containers of the remaining basic frames are all void bits (the number of which is NxK- Mx2xDxSxAxCxF). The number of basic frames which are not fully packed or not packed is R=[(NxK- Mx2xDxSxAxCxF)/K], [] represents rounding up. A case in which the first (NxK- Mx2xDxSxAxCxF) bits in IQ containers of the ''N-basic frame group" are void bits and the rest of the "N-basic frame group" is packed with valid bits (the total number of which is $M \times 2 \times D \times S \times A \times C \times F$), is equivalent to an extension to the pattern of Fig.3, and has a substantially equal effect.

Compared with the embodiment of Fig.3, the data packing pattern in the embodiment of Fig. 2 is slightly better in delay performance. In the patterns described above, the unit of data packing is one bit, while in practice, the unit of data packing may be more than one bit, and the pattern therefor may be similar to those described above.

An embodiment of the invention provides a method for data synchronization on CPRI uplink and CPRI downlink, a method of obtaining a starting time of an "N-basic frame group".

When receiving IQ data on the CPRI downlink, an RE needs to know from which basic frame a complete "basic frame group" starts. In addition, the RE generally also needs to know which radio frame all the IQ data belongs to and the position of the IQ data in the radio frame. In the process of downlink data transmission, an REC has downlink IQ data of every M service RAT periods carried in a basic frame group for transmission to the RE on CPRI downlink according to an IQ data packing rule. In addition, the REC may have the boundary of a common multiple period of a CPRI 10-ms frame and a radio frame (preferably, the boundary of a least common multiple period) indicated on CPRI downlink according to a common multiple relationship between a 10-ms CPRI frame period and a radio frame period for an RAT, from which the REC starts to send IQ data of a new basic frame group on the CPRI downlink and sends IQ data repeatedly at a period of the basic frame group. The RE may obtain information on a starting time of each basic frame group and extract the IQ data through a counter of its own with reference to the boundary of the common multiple period of a CPRI 10-ms frame and a radio frame.

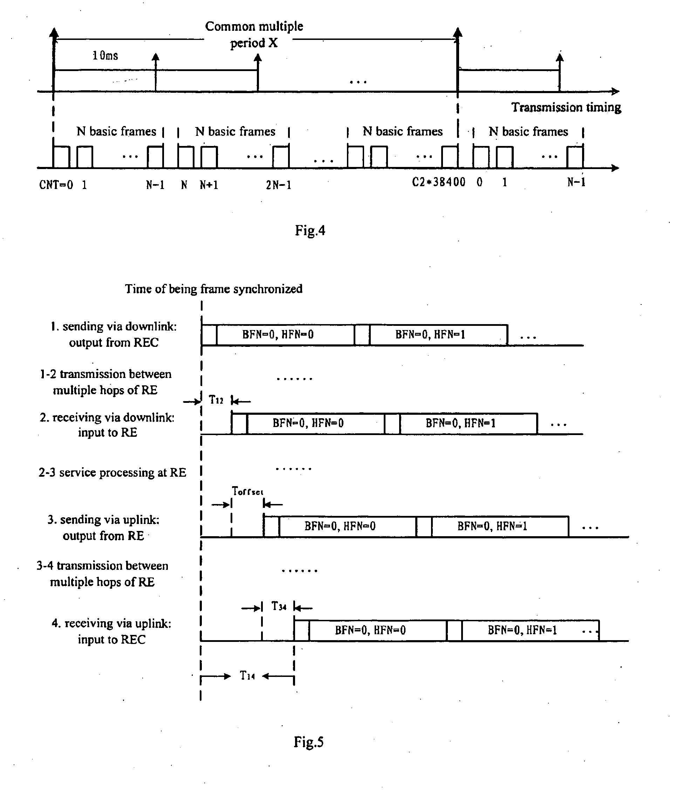

Assuming a radio frame period for a certain RAT is P ms, P and 10 (a period of 150 CPRI hyper frames, expressed in ms) have a common multiple X (ms), X/P=C1, and X/10=C2, where both C1 and C2 are integers), then the number of radio frames for this RAT in C2 10-ms CPRI frame periods is C1. A period between two bold arrows in Fig.4 is X ms, indicating C2 10-ms CPRI frame periods (i.e. C1 RAT radio frame periods). It can be inferred definitely that there are an integral number of basic frame groups. The REC has a starting time of the X ms period as well as of which radio frame that time is a starting time, indicated on the downlink for the RE.

Upon knowing the start of an X-ms period, the RE may obtain a starting position of a "basic frame group" by itself through a counting method. The CNT in Fig. 4 is a counter for this. Starting from the first bold arrow (the start of an X-ms period), the counter CNT is incremented by 1 upon receiving each CPRI basic frame by the RE. The CNT counts from 0 again upon the next bold arrow (the start of the next X-ms period).

The RE thus obtains the positions of all the downlink IQ data in the RAT radio frames.

In the process of CPRI uplink transmission, on the other hand, the RE has uplink IQ data of every M radio frames, after service processing for a fixed time delay, carried in each basic frame group for transmission to the REC on CPRI uplink. During the uplink data transmission, a relationship between the basic frame group and the uplink CPRI frame timing is kept to be identical to that for the downlink. The REC thus may obtain a starting time of each uplink basic frame group and extract the uplink IQ data through compensation for the fixed transmission time delay and processing time delay according to the synchronization relationship with the CPRI downlink.

Fig.5 illustrates a relationship in terms of framing between uplink and downlink in CPRI specification V2.0. A total delay for the intermediate-hop REs to implement framing for the G-th hop (the RE closest to the REC is the first hop) on the uplink is $\sum_{i=1}^{G-1} N^{(i)}$ basic frames, where $N^{(i)}$ represents an uplink delay for the i-th hop RE to implement framing for the lower hop. A lower-hop RE here refers to an RE in a plurality of cascaded REs on a link, which is farther from the REC, and an "upper hop" is to the contrary.

When an RE sends uplink CPRI frames to the upper hop (or the REC), a relationship between the uplink IQ data and the uplink CPRI frames is made identical to a relationship between the downlink IQ data and the downlink CPRI frames, with only a delay of Toffset. Therefore, the REC can obtain position information of the uplink IQ data of an RE, including a starting position of a "basic frame group", according to a sum of framing delays for the intermediate-hop REs using a method similar to that for an RE to obtain position information of downlink IQ data.

Upon transmission for multi-hop cascaded REs, the transmission may be implemented transparently between an upper-hop RE and a lower-hop RE according to the CPRI specification, and an intermediate-hop RE need not know the contents and format of the data forwarded by the RE, of another RE. In the case of multi-hop cascaded REs, an intermediate-hop RE processes the data of an upper/lower hop RE (including uplink and downlink data) in a way identical to that in CPRI specification V2.0, without needing of any special processing.

Among the parameters mentioned herein, some must be known to an RE for normal operations, which may be obtained through a pre-agreed method or informed to the RE by the REC via a CPRI control and management channel.

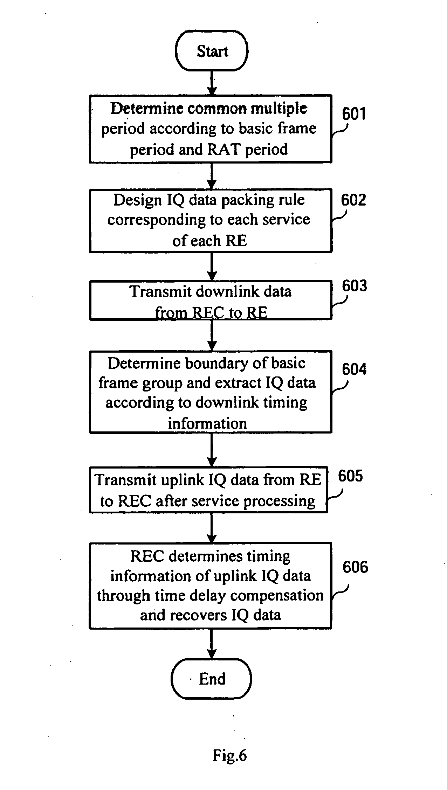

Based on the above, a relatively optimal flow may be summarized as shown in Fig.6, including all steps in the whole process of IQ data transmission.

In step 601, a common multiple period is determined according to a common multiple relationship between a CPRI basic frame period and a service RAT period, to be equal to an integer N times the basic frame period and an integer M times the service RAT period, and data of every M service RAT periods is carried in a basic frame group composed of every N basic frames.

In step 602, an IQ service data packing rule corresponding to each service of each RE is designed to describe a packing pattern in which the IQ data of every M service RAT periods are packed in load areas of the basic frame group, such that the radio service IQ data are carried as evenly as possible in each basic frame in the basic frame group, as illustrated in detail in Fig.2 and Fig.3.

In step 603, in the process of downlink data transmission, an REC has downlink IQ data of every M service RAT periods carried in each basic frame group for transmission to the RE on CPRI downlink according to an IQ data packing rule, and may have the boundary of a common multiple period of a CPRI 10-ms frame and a radio frame (preferably, the boundary of a least common multiple period) indicated on CPRI downlink according to a common multiple relationship between a 10-ms CPRI frame period and a radio frame period for an RAT, from which the REC starts to send IQ data of a new basic frame group on the CPRI downlink and sends IQ data repeatedly at a period of the basic frame group.

In step 604, the RE obtains information on a starting time of each basic frame group and extracts the IQ data by counting with reference to the boundary of the common multiple period of a CPRI 10-ms frame and a radio frame.

In step 605, in the process of CPRI uplink transmission, the RE has uplink IQ data of every M radio frames, after service processing for a fixed time delay, carried in each basic frame group for transmission to the REC on CPRI uplink.

In step 606, the REC obtains a starting time of each basic frame group and extracts the uplink IQ data through compensation for the fixed transmission time delay and processing time delay according to a synchronization relationship with the CPRI downlink, wherein upon transmission for multi-hop cascaded REs, the transmission may be implemented transparently between an upper-hop RE and a lower-hop RE according to the CPRI specification.

As appreciated by those skilled in the art, the description of the technical particulars in the above embodiments has been presented in certain contexts of application, in which specific configuration of parameters or the like has been provided. However, in order to attain the objects of the invention, the parameters may be configured flexibly as required in a practical application without departing from the essence and scope of the invention.

The invention has been described and illustrated with reference to the embodiments thereof and the drawings. It shall be obvious to those skilled in the art that those embodiments and drawings are merely illustrative and not restrictive, that the present invention shall not be limited to the embodiments disclosed here, and that various modifications and variations may be made thereto in light of the descriptions and the drawings without departing from the scope of the present invention as defined in the accompanying claims.

## Claims

1. A method for transmitting In-Phase/Quadrature, IQ, data for various Radio Access Technologies (RATs) via a Common Public Radio Interface, CPRI, Radio Equipment Control (REC)-Radio Equipment (RE) interface, comprising:

   determining, according to a CPRI basic frame period and an RAT period of the IQ data, a CPRI data transmission period to be a common multiple of the CPRI basic frame period and the RAT period of the IQ data;

   if the CPRI data transmission period is equal to an integer N times the CAPRI basic frame period and to an integer M times the RAT period of the IQ data, carrying corresponding data of every M RAT periods in a basic frame group composed of every N basic frames;

   designating a data packing rule corresponding to each service of each RE, wherein according to the data packing rule, carrying space of K bits in a load area of each basic frame in the basic frame group is assigned for each RE, K being an integer derived by rounding up $[M \times 2 \times D \times S \times A \times C \times F/N]$, where A is a number of antennas of the RE, C is a number of carriers of the RE, S is an oversampling factor for CPRI IQ data, D is a bit width of the IQ data for each RAPT, and F is a number of sectors supported by the RE;

   determining a packing pattern in which data of the M RAT periods are packed in load areas of the basic frame group, according to the data packing rule;

   transmitting the IQ data for the various RATs on CPRI uplink/downlink according to the data packing rule, wherein according to the data packing rule, when carrying space assigned in the basic frame group is larger than actual carrying space for the service data,

   carrying space in a basic frame with a later transmission timing in the basic frame group is packed first, such that the whole carrying space in a part of basic frames with a later transmission timing is packed, carrying space in a part of basic frames with an earlier transmission timing in the basic frame group is not packed and an intermediate basic frame is packed partially with data or is not packed with data, or

   carrying space in a basic frame with an earlier transmission timing in the basic frame group is packed first such that the whole carrying space in a part of basic frames with an earlier transmission timing is packed, carrying space in a part of basic frames with a later transmission timing in the basic frame group is not packed and an intermediate basic frame is packed partially with data or is not packed with data.

2. The method according to claim 1, wherein the CPRI data transmission period is a least common multiple period of the CPRI basic frame period and the RAT period of the IQ data.

3. The method according to any one of claims 1-2, wherein according to the data packing rule, carrying space in each basic frame is assigned to IQ data for each RAT of each RE.

4. The method according to any one of claims 1-2, wherein in the process of downlink data transmission, an REC has downlink data of every M RAT periods carried in each basic frame group for transmission to the RE on CPRI downlink according to the data packing rule;

   the RE obtains a starting time of each basic frame group and extracts the downlink data by counting with reference to timing information transmitted on the CPRI downlink.

**5.** The method according to claim 4, wherein in the process of uplink data transmission, the RE has uplink data of every M RAT periods, after service processing for a fixed time delay, carried in each basic frame group for transmission to the REC on CPRI uplink;
the REC obtains a starting time of each basic frame group and extracts the uplink data through compensation for the fixed transmission time delay and processing time delay according to a synchronization relationship with the CPRI downlink.

**6.** The method according to claim 5, wherein upon transmission for multi-hop cascaded REs, the transmission is implemented transparently between an upper-hop RE and a lovsrer-hop RE according to the CPRI specification.

**7.** The method according to claim 6, wherein the REC informs the RE of parameters related to the transmission of the IQ data for the various RATs via a control and management channel.

**Patentansprüche**

**1.** Verfahren zur Übertragung von In-Phase-/Quadratur, IQ-Daten für verschiedene Funkzugangstechnologien (RATs) über eine gemeinsame öffentliche Funkschnittstelle, CPRI, eine Funkgerätesteuerungs-(REC)-Funkgeräte-(RE)-Schnittstelle, das aufweist:

Bestimmen, gemäß einer CPRI-Basisdatenübertragungsblockzeitdauer und einer RAT-Zeitdauer der IQ-Daten, eine CPRI-Datenübertragungszeitdauer als ein gemeinsames Vielfaches der CPRI-Basisdatenübertragungsblockzeitdauer und der RAT-Zeitdauer der IQ-Daten;
falls die CPRI-Datenübertragungszeitdauer ein ganzzahliges Vielfaches N der CPRI-Basisdatenübertragungsblockzeitdauer und ein ganzzahliges Vielfachen M der RAT-Zeitdauer der IQ-Daten ist, Übertragen entsprechender Daten jeder der M RAT-Zeitdauem in eine Basisdatenübertragungsblockgruppe, die aus sämtlichen N Basisdatenübertragungsblöcken zusammengesetzt ist;
Zuweisen einer Datenkomprimierungsvorschrift die jedem Dienst jedes RE entspricht, wobei gemäß der Datenkomprimierungsvorschrift jedem RE ein Übertragungsraum von K Bits in einem Ladebereich jedes Basisdatenübertragungsblocks in der Basisdatenübertragungsblockgruppe zugeordnet ist, wobei K eine ganze Zahl ist, die sich durch Aufrunden von $[M \times 2 \times D \times S \times A \times C \times F / N]$ ergibt, wobei A eine Anzahl von Antennen des RE, C eine Anzahl von Trägem des RE, S ein Überabtastungsfaktor für CPRI-IQ-Daten, D eine Bitweite der IQ-Daten für jedes RAT und F eine Anzahl von Sektoren ist, die von dem RE unterstützt werden;
Bestimmen eines Komprimierungsmusters, in welchem die Daten der M RAT-Zeitdauem in Ladebereichen der Basisdatenübertragungsblockgruppe gemäß der Datenkomprimierungsvorschrift komprimiert sind;
Übertragen der IQ-Daten für die verschiedenen RATs auf Uplink-/Downlink-Verbindungen gemäß der Datenkomprimierungsvorschrift,
wobei gemäß der Datenkomprimierungsvorschrift, wenn der Übertragungsraum, der in der Basisdatenübertragungsblockgruppe zugeordnet ist, größer ist als der eigentliche Übertragungsraum für die Servicedaten, wobei Übertragungsraum in einem Basisdatenübertragungsblock mit einem späteren Übertragungszeitpunkt in der Basisübertragungsblockgruppe als erstes komprimiert wird, so dass der gesamte Übertragungsraum in einem Teil der Basisdatenübertragungsblöcke mit einem späteren Übertragungszeitpunkt komprimiert wird, wobei Übertragungsraum in einem Teil der Basisdatenübertragungsblöcke mit einem früheren Übertragungszeitpunkt in der Basisdatenübertragungsblockgruppe nicht komprimiert wird, und wobei ein Zwischenbasisdatenübertragungsblock teilweise mit Daten komprimiert wird oder nicht mit Daten komprimiert wird, oder
Übertragungsraum in einem Basisdatenübertragungsblock mit einem früheren Übertragungszeitpunkt als erstes in der Basisdatenübertragungsblockgruppe komprimiert wird, so dass der gesamte Übertragungsraum in einem Teil der Basisdatenübertragungsblöcke mit einem früheren Übertragungszeitpunkt komprimiert wird, Übertragungsraum in einem Teil der Basisdatenübertragungsblöcke mit einem späteren Übertragungszeitpunkt in der Basisdatenübertragungsblockgruppe nicht komprimiert wird, und ein Zwischenbasisdatenübertragungsblock teilweise mit Daten komprimiert wird, oder nicht mit Daten komprimiert wird.

**2.** Verfahren nach Anspruch 1, bei dem die CPRI-Datenübertragungszeitdauer zumindest eine gemeinsame Vielfachzeitdauer der CPRI-Basisübertragungsblockzeitdauer und der RAT-Zeitdauer der IQ-Daten ist.

**3.** Verfahren nach einem der Ansprüche 1-2, bei dem gemäß der Datenkomprimierungsvorschrift in jedem Basisdatenübertragungsblock Übertragungsraum für IQ-Daten jede RAT jedes RE zugeordnet ist.

**4.** Verfahren gemäß einem der Ansprüche 1 - 2, bei dem in dem Prozess der Downlink-Datenübertragung ein REC Downlink-Daten jeder M RAT-Zeitdauem aufweist, die in jeder Basisdatenübertragungsblockgruppe zur Übertragung zu dem RE auf der CPRI-Downlink-Verbindung gemäß der Datenkomprimierungsvorschrift übertragen werden; das RE erhält eine Startzeit für jede Basisdatenübertragungsblockgruppe und extrahiert die Downlink-Daten durch Abzählen unter Bezug auf die Zeitpunktinformation, die auf die CPRI-Downlink-Verbindung übertragen worden ist.

**5.** Verfahren nach Anspruch 4, bei dem während des Vorgangs der Uplink-DatenÜbertragung das RE Uplink-Daten jeder M RAT-Zeitdauern aufweist, nach der Dienstverarbeitung für eine festgesetzte Zeitverzögerung, die in jeder Basisdatenübertragungsblockgruppe für die Übertragung zu der REC auf der CPRI-Uplink-Verbindung übertragen wird; die REC erhält einen Startzeitpunkt jeder Basisdatenübertragungsblockgruppe und extrahiert die Uplink-Daten mittels eines Ausgleichs für die festgesetzte Übertragungszeitpunktverzögerung und die Verarbeitungszeitverzögerung gemäß einer Synchronisationsbeziehung mit der CPRI-Downlink-Verbindung.

**6.** Verfahren nach Anspruch 5, bei dem auf die Übertragung von Multi-Hop kaskadierten REs die Übertragung zwischen einem Upper-Hop RE und einem Lower-Hop RE gemäß der CPRI-Spezifikation transparent ausgeführt wird.

**7.** Verfahren nach Anspruch 6, bei dem die REC das RE über einen Steuer- und Führungskanal über Parameter informiert, die die Übertragung der IQ-Daten für die verschiedenen RATs betrifft.

**Revendications**

**1.** Procédé pour la transmission de données en phase et en quadrature, IQ, pour diverses technologies d'accès radio (RAT) par le biais d'une interface de radio publique commune, CPRI, une interface entre la commande d'équipement radio (REC) et l'équipement radio (RE), comportant les étapes consistant à :

déterminer, en fonction d'une période de trame de base CPRI et d'une période RAT des données IQ, une période de transmission de données CPRI comme étant un commun multiple de la période de trame de base CPRI et de la période RAT des données IQ ;
si la période de transmission de données CPRI est égale à un nombre entier N fois la période de trame de base CPRI et à un entier M fois la période RAT des données IQ, acheminer les données correspondantes de toutes les M périodes RAT dans un groupe de trames de base composé de toutes les N trames de base ;
désigner une règle de compression des données correspondant à chaque service de chaque RE, comme quoi, en fonction de la règle de compression des données, un espace d'acheminement de K bits dans une zone de charge de chaque trame de base dans le groupe de trames de base est affecté pour chaque RE, K étant un nombre entier dérivé en arrondissant [Mx2xDxSxAxCxF/N] au chiffre supérieur, où A est un nombre d'antennes du RE, C est un nombre de porteuses du RE, S est un facteur de suréchantillonnage pour les données IQ CPRI, D est une largeur de bit des données IQ pour chaque RAT, et F est un nombre de secteurs pris en charge par le RE ;
déterminer un modèle de compression selon lequel les données des M périodes RAT sont comprimées dans des zones de charge du groupe de trames de base, en fonction de la règle de compression des données ;
transmettre les données IQ pour les diverses RAT sur liaison montante / liaison descendante CPRI en fonction de la règle de compression des données,
dans lequel, en fonction de la règle de compression des données, quand l'espace d'acheminement affecté dans le groupe de trames de base est supérieur à l'espace d'acheminement réel pour les données de service,
l'espace d'acheminement dans une trame de base ayant une synchronisation de transmission ultérieure dans le groupe de trames de base est comprimé en premier, de telle manière que l'espace d'acheminement tout entier dans une partie des trames de base ayant une synchronisation de transmission ultérieure est comprimé, l'espace d'acheminement dans une partie des trames de base ayant une synchronisation de transmission antérieure dans le groupe de trames de base n'est pas comprimé et une trame de base intermédiaire est comprimée partiellement avec des données ou n'est pas comprimée avec des données, ou
l'espace d'acheminement dans une trame de base ayant une synchronisation de transmission antérieure dans le groupe de trames de base est comprimé en premier, de telle manière que l'espace d'acheminement tout entier dans une partie des trames de base ayant une synchronisation de transmission antérieure est comprimé, l'espace d'acheminement dans une partie des trames de base ayant une synchronisation de transmission ultérieure dans le groupe de trames de base n'est pas comprimé et une trame de base intermédiaire est comprimée partiellement avec des données ou n'est pas comprimée avec des données.

**2.** Procédé selon la revendication 1, dans lequel la période de transmission de données CPRI est une période représentant le plus petit commun multiple de la période de trame de base CPRI et de la période RAT des données IQ.

**3.** Procédé selon l'une quelconque des revendications précédentes 1 et 2, dans lequel, en fonction de la règle de compression des données, l'espace d'acheminement dans chaque trame de base est affecté aux données IQ pour chaque RAT de chaque RE.

**4.** Procédé selon l'une quelconque des revendications précédentes 1 et 2, dans lequel, au cours du processus de transmission de données entrantes, une REC fait acheminer des données entrantes de toutes les M périodes RAT dans chaque groupe de trames de base à des fins de transmission au RE sur liaison descendante CPRI en fonction de la règle de compression des données ;
le RE obtient un temps de démarrage de chaque groupe de trames de base et extrait les données entrantes par comptage en référence aux informations de synchronisation transmises sur la liaison descendante CPRI.

**5.** Procédé selon la revendication 4, dans lequel, au cours du processus de transmission de données sortantes, le RE fait acheminer des données sortantes de toutes les M périodes RAT, après traitement de service pendant une temporisation fixe, dans chaque groupe de trames de base à des fins de transmission à la REC sur la liaison montante CPRI ;
la REC obtient un temps de démarrage de chaque groupe de trames de base et extrait les données sortantes par compensation pour la temporisation de transmission fixe et la temporisation de traitement en fonction d'une relation de synchronisation avec la liaison descendante CPRI.

**6.** Procédé selon la revendication 5, dans lequel, lors de la transmission pour des RE en cascade à plusieurs bonds, la transmission est mise en oeuvre de manière transparente entre un RE à bonds supérieurs et un RE à bonds inférieurs en fonction de la spécification de la CPRI.

**7.** Procédé selon la revendication 6, dans lequel la REC signale au RE les paramètres connexes à la transmission des données IQ pour les diverses RAT par le biais d'un canal de commande et de gestion.

Fig.1

Fig.2

Fig.3

Fig.4

Fig.5

Fig.6

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 200610024171
- WO 2005029713 A
- US 2005105534 A1
- US 2005105552 A1